# EUROPEAN PATENT APPLICATION

(11) **EP 4 174 253 A1**
(43) Date of publication of application: **03.05.2023**
(21) Application number: 21842443.0
(22) Date of filing: 09.07.2021
(51) Int. Cl.: E04G 21/18, G01C 15/00

(54) **BATTER BOARD PLACEMENT METHOD, BATTER BOARD PLACEMENT PROGRAM, AND SURVEY SYSTEM**

(30) Priority: 14.07.2020 JP 2020120938
(71) Applicant: Topcon Corporation, Tokyo 174-8580 (JP)
(72) Inventor: NISHI, Yoshihiro, Tokyo 174-8580 (JP); SATO, Kohei, Tokyo 174-8580 (JP); TANAKA, Takashi, Tokyo 174-8580 (JP)
(74) Representative: Schmitt-Nilson Schraud Waibel Wohlfrom Patentanwälte Partnerschaft mbB
(86) International application number: PCT/JP2021/026018
(87) International publication number: WO 2022/014505

(57) **Abstract**

A method using a surveying device 200 and a survey target device 300 includes: performing benchmark measurement including measuring an altitude of a benchmark that serves as a reference height of a batter board; performing stake top measurement including measuring an altitude of a stake top of a batter board stake installed; and performing beam top position display including calculating a difference in height from the stake top of the batter board stake to a beam top based on the reference height of a foundation stored in advance, the altitude of the benchmark, the altitude of the stake top of the batter board stake, and displaying the difference on a terminal device 100.

## Description

### BACKGROUND

The present disclosure relates to a batter board setting method, a batter board setting program, and a surveying system.

### BACKGROUND ART

"Batter boards" are for determining the positions of columns and walls before the start of construction and are temporary frameworks prepared by placing stakes and beams at necessary points prior to foundation construction in order to set the horizontal lines or other indicators of the foundations of buildings, which are made from concrete or the like.

Various jigs for setting batter boards have been known (Patent Document 1).

### CITATION LIST

### PATENT DOCUMENT

Patent Document 1: Japanese Unexamined Patent Publication No. H11-241509

### SUMMARY OF THE INVENTION

### TECHNICAL PROBLEMS

At a construction site, however, information and communications technology (ICT) has been more widely utilized and more efficient works are required.

One aspect of the present disclosure was made in view of the above. It is an object of the present disclosure to provide a batter board setting method, a batter board setting program, and a surveying system that allow an operator to set batter boards more efficiently at a construction site.

### SOLUTION TO THE PROBLEMS

In order to achieve the object, a batter board setting method according to the present disclosure is a batter board setting method of setting a batter board including a batter board stake, a batter board beam, and a leveling string, by use of a surveying system including a surveying device and a terminal device, the batter board setting method including: performing benchmark measurement including measuring an altitude of a benchmark that serves as a reference height of the batter board, by use of the surveying device; performing stake top measurement including measuring an altitude of a stake top of the batter board stake installed; and performing beam top position display including calculating a difference in height from the stake top of the batter board stake to a reference height of a foundation based on the reference height of the foundation stored in advance, the altitude of the benchmark, the altitude of the stake top of the batter board stake, and displaying the difference on the terminal device.

In order to achieve the object, a batter board setting method according to the present disclosure is a batter board setting method of setting batter board tools including a batter board stake, a batter board beam, and a leveling string, by use of a surveying system including a surveying device and a terminal device, the batter board setting method including: performing benchmark measurement including measuring a position of a benchmark that serves as a reference, by use of the surveying device; performing imaginary extension calculation including calculating an imaginary extension that is an extension of a foundation reference side indicating a point at which a leveling string is to be stretched out; and performing leveling string deviation guide including displaying a distance between a surveying position and the imaginary extension on the terminal device.

In order to achieve the object, a surveying system according to the present disclosure is a surveying system for assisting setting of a batter board including a batter board stake, a batter board beam, and a leveling string, the surveying system including: a surveying device configured to measure altitudes of a benchmark that serves as a reference height of the batter board and the batter board stake; a terminal device including a screen unit; a beam top position calculation section configured to calculate a difference in height from the stake top of the batter board stake to a reference height of a foundation based on the reference height of the foundation stored in advance, the altitudes of the benchmark and the stake top of the batter board stake surveyed using the surveying device, and cause the screen unit to display the difference.

In order to achieve the object, a surveying system according to the present disclosure is for assisting setting of a batter board including a batter board stake and a batter board beam, the surveying system including: a surveying device configured to measure a position of a benchmark that serves as a reference; a terminal device including a screen unit; an imaginary extension calculation section configured to calculate an imaginary extension that is an extension of a foundation reference side indicating a point at which a leveling string is to be stretched out; and a leveling string deviation guide section configured to calculate a distance between a surveying position and the imaginary extension, and cause the terminal device to display the distance.

In order to achieve the object, a batter board setting program according to the present disclosure is a batter board setting program for setting a batter board including a batter board stake, a batter board beam, and a leveling string, by use of a surveying system including a surveying device and a terminal device, the batter board setting program causing: the surveying device to perform benchmark measurement including measuring an altitude of a benchmark that serves as a reference height of the batter board; the surveying device to perform stake top measurement including measuring an altitude of a stake top of the batter board stake installed; and the terminal device to perform beam top position display including calculating a difference in height from the stake top of the batter board stake to a reference height of a foundation based on the reference height of the foundation stored in advance, the altitude of the benchmark, the altitude of the stake top of the batter board stake, and displaying the difference on the terminal device.

In order to achieve the object, a batter board setting program according to the present disclosure is a batter board setting program for setting batter board tools including a batter board stake, a batter board beam, and a leveling string, by use of a surveying system including a surveying device and a terminal device, the batter board setting program causing: the surveying device to perform benchmark measurement including measuring a position of a benchmark that serves as a reference; the terminal device to perform imaginary extension calculation including calculating an imaginary extension that is an extension of a foundation reference side indicating a point at which a leveling string is to be stretched out; and
the terminal device to perform leveling string deviation guide including displaying a distance between a surveying position and the imaginary extension.

### ADVANTAGES OF THE INVENTION

The batter board setting method, the batter board setting program, and the surveying system according to the present disclosure allow an operator to set batter boards more efficiently at a construction site.

### BRIEF DESCRIPTION OF THE DRAWINGS

FIG. 1 illustrates a batter board at a construction site.
FIG. 2 is a configuration diagram of a surveying system according to an embodiment of the present disclosure.
FIG. 3 illustrates the relationship between a batter board stake and the altitude of a benchmark.
FIG. 4 is a flowchart showing a processing flow according to an embodiment of the present disclosure.
FIG. 5 illustrates an example screen.
FIG. 6 is a flowchart showing a processing flow according to one embodiment of the present disclosure.
FIG. 7 illustrates yet another example screen.
FIG. 8 is a flowchart showing a processing flow according to one embodiment of the present disclosure.
FIG. 9 illustrates still another example screen.

### DETAILED DESCRIPTION

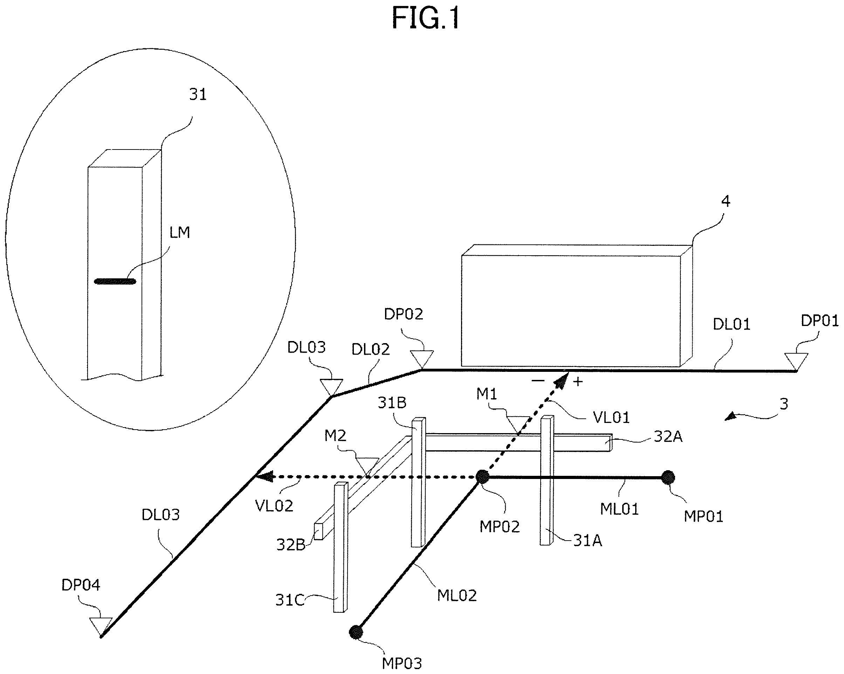

One embodiment of the present disclosure will be described below with reference to the drawings. FIG. 1 illustrates setting a batter board at a construction site. As described above, "batter boards" are for determining the positions of columns and walls before the start of construction and are temporary frameworks prepared by placing stakes and beams at necessary points prior to foundation construction in order to set the horizontal lines or other indicators of the foundations of buildings, which are made from concrete or the like. A series of works using the batter boards is also referred to as "setting batter boards." The batter boards become unnecessary after setting marks, such as reference marks, on an immovable object as a reference and are eventually removed. For example, a batter board 3 is a corner batter board including batter board stakes 31A, 31B, and 31C and batter board beams 32A and 32B. Such corner batter boards are placed at four corners of a building, in the case where the building is rectangular. Across the facing corner batter boards, leveling strings are stretched out. In the present disclosure, the batter board stakes 31A, 31B, and 31C have the same functions and are collectively referred to as the "batter board stakes 31" without distinction. Similarly, the batter board beams 32A and 32B are also collectively referred to as "batter board beams 32". The batter board stakes are driven into the ground for setting a batter board. Each batter board beam is a horizontal plate indicating the altitude of a foundation marked on a batter board stake and placed with its upper end aligned with a beam top position.

Each batter board stake 31 includes a mark LM indicating a beam top position. This mark LM is also referred to as a "horizontal mark." The mark LM indicates the altitude of a building foundation.

Provided inside the batter board 3 are the leveling strings (not shown). The leveling strings are real strings that stretch out between the facing batter board beams in setting a batter board and show a horizontal. The leveling strings may be nylon or polyethylene strings or piano wires. The leveling strings indicate a height that is the altitude of the building foundation. In this figure, lines ML01 and ML02 indicate positions at which leveling strings are to stretch, as design information set in advance and are referred to as "reference sides" of the leveling strings. For setting the reference sides, foundation points MP01, MP02, and MP03 are set as design information. These foundation points can be start points or end points of the reference sides and serves as design drawings of the leveling strings.

The leveling strings stretch across the facing batter board beams at fixing points on the batter board beams by nailing or any other suitable means. In this figure, one of the leveling strings stretches out between the batter board beam 32A and another batter board beam facing thereto of a corner batter board (not shown). The upper end positions (i.e., the beam tops) of the batter board beams 32 have the same height as the altitude of the leveling strings. In order to accurately align the batter board beams 32 with the positions, marks LM are made on the batter board stakes 31.

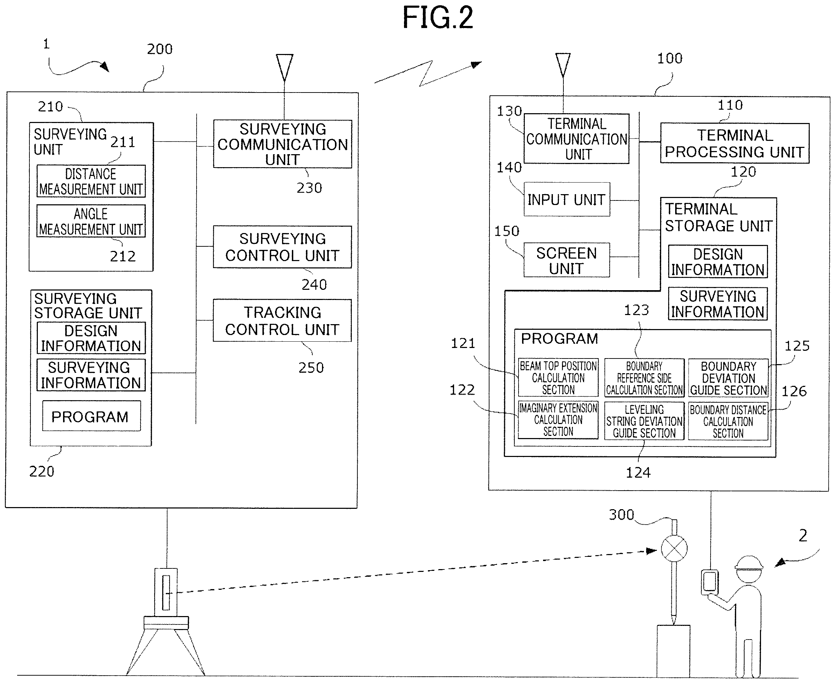

FIG. 2 is a configuration diagram of a surveying system according to the embodiment of the present disclosure. As shown in this figure, a surveying system 1 includes a surveying device 200, a terminal device 100, and a survey target device 300.

The surveying device 200 may be, according to one embodiment, a surveying instrument of total station (TS)-equivalent light wave type on known position coordinates, for example. The "TS-equivalent light wave type" includes, in addition to the TS, non-telescopic light wave-based measurement instruments capable of performing measurement equivalent to that is performed by the TS equipped with an automatic tracking function. The surveying device 200 can automatically track the survey target device 300 as a survey target, so that, by tracking the survey target device 300, the surveying device 200 can survey a desired point at a construction site at which the survey target device 300 is placed. The survey target device 300 includes an optical element that reflects the light radiated from the surveying device 200 back to the surveying device 200. That is, the optical element is what is called a "retroreflective prism." The survey target device 300 may be a surveying pole with a known length and with the retroreflective prism 301 provided thereon.

Note that the surveying device 200 and the survey target device 300 are configured as physically individual hardware but as being capable of fulfilling the function of surveying in cooperation with each other. Therefore, the survey target device 300 may be interpreted as a part of the configuration of the surveying device 200.

The surveying device 200 includes a horizontal rotation driving unit and a telescope unit on the horizontal rotation driving unit with a vertical rotation driving unit interposed therebetween. The horizontal rotation driving unit is supported by a tripod and drives horizontal rotation. The vertical rotation drive unit is vertically rotatable. Although not shown, the surveying device 200 includes horizontal and vertical angle detection units as angle measurement units 212. The horizontal angle detection unit detects the horizontal rotation angle, whereas the vertical angle detection unit detects the vertical rotation angle. The use of these horizontal and vertical angle detectors makes it possible for the surveying device 200 to measure the horizontal and vertical angles of the collimation direction, respectively.

The surveying device 200 further includes, as distance measurement units 211, for example, an electro-optical distance meter that measures the slope distance to the survey target device 300. For the sake of convenience, these angle and distance measurement units 212 and 211 are collectively referred to as a "surveying unit 210."

The surveying device 200 further includes a surveying storage unit 220, a surveying communication unit 230, a surveying control unit 240, and a tracking control unit 250.

The surveying storage unit 220 stores, in advance, various programs for the surveying, tracking, or other controls; or information (e.g., the altitude) on the ground, design information, or other information, which are used at a construction site.

The surveying communication unit 230 is communicative with external devices such as the terminal device 100 and is, for example, a wireless communication means.

The surveying control unit 240 has the function of controlling the surveying by the surveying device 200. More specifically, the surveying control unit 240 automatically or manually collimates the survey target device 300. The surveying control unit 240 detects the horizontal angle, the vertical angle, and the slope distance between the surveying device 200 and the survey target device 300 using the angle measurement units (i.e., the horizontal and vertical angle detection units) 212 and the distance measurement units 211 described above. Here, the retroreflective prism as an example of the survey target device 300 is attached to a pole. The distance from the prism to a distal end of the pole is known. Accordingly, the surveying control unit 240 calculates out, as surveying results, the position of the distal end (i.e., the position of the upper or lower end) of the pole by correcting the horizontal angle, vertical angle, and slope distance detected by the angle and distance measurement units 212 and 211.

The tracking control unit 250 is configured to control the drive of the horizontal and vertical rotation driving units in such a way that tracking light emitted from a tracking unit and then reflected from the survey target device 300 is continuously received by the tracking control unit 250.

Another embodiment of the surveying device 200 is a GNSS surveying instrument. In this case, surveying is performed using a GNSS receiver as the survey target device 300.

Examples of the terminal device 100 include a smartphone, a feature phone, a tablet, a handheld computer device (e.g., a personal digital assistant (PDA)), and a wearable terminal (e.g., a glasses-type device or a watch-type device). A general-purpose terminal is, with application software installed, usable as the portable display terminal of this embodiment. Such the terminal device 100 includes a screen unit 150 and is easily carriable at a work site. The screen unit 150 may be viewed while the terminal device 100 is carried in a hands-free way or in one hand. The terminal device 100 may also include an internal power supply such as a battery and may thus be operatable for a certain period without requiring external power supply.

The terminal device 100 includes a terminal communication unit 130, a terminal storage unit 120, a terminal processing unit 110, an input unit 140, and the screen unit 150.

Although not shown, the terminal processing unit 110 executes the functions and/or methods implemented by codes or commands included in the programs stored in the terminal storage unit 120. Examples of the terminal processing unit 110 include a central processing unit (CPU), a microprocessor unit (MPU), a graphics processing unit (GPU), a microprocessor, a processor core, a multiprocessor, an application specific integrated circuit (ASIC), and a field-programmable gate array (FPGA). The terminal processing unit 110 may include a logic circuit or a dedicated circuit formed in an integrated circuit, for example, to execute the processing disclosed in the embodiment. These circuits may be one or more integrated circuits. A single integrated circuit may execute the plural types of processing described in the embodiment. Although not shown, the terminal processing unit 110 may include a main storage unit that temporarily stores the programs to be read out from the terminal storage unit 120 and provides a workspace to the terminal processing unit 110.

The terminal communication unit 130 is communicative with the surveying communication unit 230 of the surveying device 200, and is capable of receiving, for example, a surveying result obtained by surveying the survey target device 300 by the surveying device 200 or positional information (a horizontal angle, a vertical angle, and a slope distance to the pole end) calculated by the surveying control unit 240. The calculation of the positional information according to the surveying results may be performed by the surveying device 200 or by the terminal device 100. The communications may be wired or wireless. Any communication protocol may be used to establish the communications between the surveying device 200 and the terminal device 100, as long as mutual communications can be established therebetween.

The input unit 140 is any one or a combination of all types of devices capable of receiving inputs from a user, that is, an operator 2 and providing the information related to the inputs to the terminal processing unit 110. Examples of the input unit 140 include, in addition to a hardware input means such as buttons, a software input means displayed on a display unit such as a touch panel, a remote controller, and an audio input means such as a microphone.

The screen unit 150 is any one or a combination of all types of devices capable of displaying a screen. Examples include a flat display such as a liquid crystal display or an organic light-emitting diode (OLED) display, a curved display, a folding screen on a foldable terminal, a head-mounted display, or a device displayable through projection on a substance using a small projector.

The terminal storage unit 120 functions to store various necessary programs or various data. In addition, the terminal storage unit 120 can store the surveying information received by the terminal communication unit 130 and the position information calculated based on the surveying information. For example, the terminal storage unit 120 stores the design information including the information (e.g., the altitude) on the ground used at a construction site. The terminal storage unit 120 is any of various storage media such as a hard disk drive (HDD), a solid state drive (SSD), and a flash memory.

The design information includes design drawings necessary for construction works. Examples of the construction works include constructions of structures such as buildings, roads, railroads, tunnels, bridges, ditches, waterways, and rivers. The design drawing includes data on points such as foundation points and boundary points, data on lines such as foundation reference sides and boundary reference sides, and other data.

The terminal storage unit 120 stores, as application software programs, a beam top position calculation section 121, an imaginary extension calculation section 122, a boundary reference side calculation section 123, a leveling string deviation guide section 124, a boundary deviation guide section 125, a boundary distance calculation section 126, and other sections that fulfill various functions.

As will be described later, the beam top position calculation section 121 has the function of calculating the difference in height from the stake top of the batter board stake to a reference height of a foundation based on the reference height of the foundation stored in advance, the altitudes of the benchmark and the stake top of the batter board stake surveyed using the surveying device; and displaying the difference on the screen unit.

As will be described later, the imaginary extension calculation section 122 has the function of calculating an imaginary extension that is an extension of a foundation reference side indicating a point at which a leveling string is to be stretched out.

As will be described later, the leveling string deviation guide section 124 has the function of displaying the distance between a surveying position and the imaginary extension on the terminal device.

As will be described later, the boundary reference side calculation section 123 has the function of calculating a boundary reference side indicating a boundary line of a site.

As will be described later, the boundary deviation guide section 125 has the function of calculating the intersection between the boundary reference side and the imaginary extension, and displaying the distance between the surveying position and the intersection on the terminal device.

As will be described later, the boundary distance calculation section 126 has the function of calculating the distance between the surveying position and one end of the foundation reference side, the end being proximal to the boundary line of the site.

### (Batter Board Setting Function)

Now, an outline of a batter board setting function will be described, which is one aspect of the batter board setting method, the batter board setting program, and the surveying system according to the embodiment of the present disclosure.

As shown in FIG. 1, the batter board 3 includes a plurality of batter board stakes 31 each with a mark LM indicating a beam top position. The altitude indicated by the marks LM is basically common among all the batter board stakes 31. However, since the lengths of the stakes to be used and the depths of the stakes driven by manual work vary, the work of applying the marks LM to a common altitude is not easy.

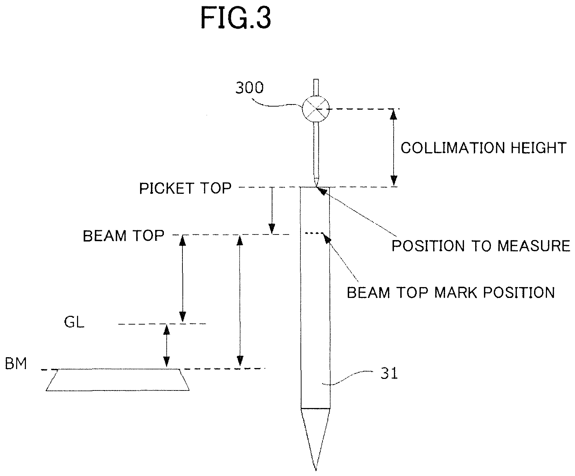

A procedure for making the marks LM to such batter board stakes 31 evenly and accurately will be described with reference to FIG. 3. FIG. 3 illustrates the relationship between a batter board stake and the altitude of a benchmark. In this figure, the vertical direction of the figure represents the height direction of the batter board stake 31. First, the length of the driven batter board stake 31 and the altitude of the stake top are unknown. The position (including altitude) of the benchmark BM at the site is known and included in the design information, or can be measured at a site. In addition, the altitude differences between the benchmark BM and the current ground GL and between the ground GL and the beam top are known and included in the design information.

Here, the operator measures the altitude of the stake top using the surveying device 200 and the survey target device 300. Once the altitude of the stake top is found out by the measurement, it becomes possible to calculate out the altitude difference between the stake top and the beam top using the information on the altitude difference between the known BM and the GL, the altitude between the GL and the beam top, or the altitude difference between the BM and the beam top.

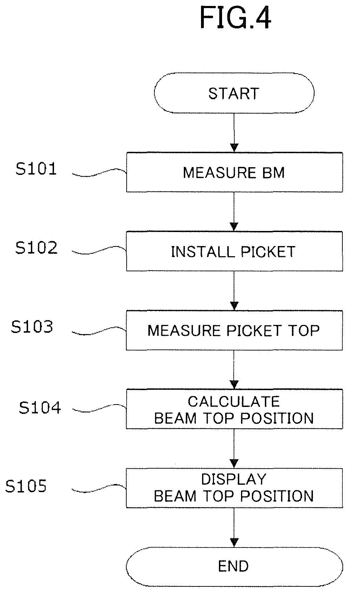

FIG. 4 is a flowchart illustrating a processing flow in a batter board setting method and a batter board setting program using the surveying system according to this embodiment.

First, in step S101, an operator places the surveying device 200 at a site, thereby setting the device point of the surveying device 200, and then surveys the benchmark (BM) and stores the altitude of the BM as a known value in the surveying storage unit 220 or in the terminal storage unit 120.

Next, in step S102, the operator sets a plurality of batter board stakes 31 at the site. The batter board stakes 31 are driven manually at positions determined in advance as design information.

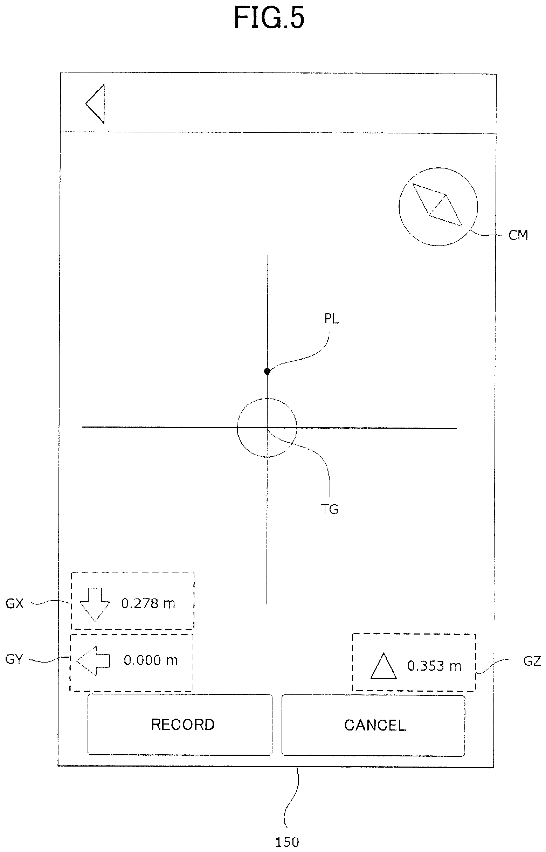

FIG. 5 is an example screen to be displayed on the screen unit 150 of the terminal device 100, for assisting the manual driving of stakes. The operator 2 selects a stake driving position from among stake driving points stored as design information. The operator 2 then approaches the position, while holding the survey target device 300. The surveying device 200 surveys the position of the survey target device 300, while automatically tracking the survey target device 300, and transmits surveying information to the terminal device 100. The terminal device 100 displays, on the screen unit 150, the position TG at which a stake is to be driven as determined as design information, the current position PL of the survey target device 300, and the difference between the positions . In this figure, the difference is shown as a difference display GX in the X-direction and a difference display GY. Moreover, orientation display CM and a difference display GZ in the Z-direction may be provided to assist the operator.

After that, in step S103, the altitude of the stake top of each batter board stake 31 is surveyed using the surveying system 1. The measured altitude of the batter board stake 31 is stored as a known value in the surveying storage unit 220 or the terminal storage unit 120.

Next, in step S104, the terminal processing unit 110 calculates the altitude difference between the stake top and the beam top position based on the information on the altitude difference between BM and GL, between GL and the beam top, or between BM and the beam top stored in the surveying storage unit 220 or the terminal storage unit 120, the altitude of BM stored in step S101, and the altitude of the stake top stored in step S103.

Then, in step S105, the altitude difference between the stake top and the beam top position calculated by the terminal processing unit 110 is displayed on the screen unit 150 of the terminal device 100. The operator actually makes a mark LM on the batter board stake 31 based on the information on the altitude difference between the stake top and the beam top displayed on the screen unit 150. This operation is repeated for each of the batter board stakes.

As described above, a batter board setting method according to one embodiment of the present disclosure is a method of setting a batter board including a batter board stake, a batter board beam, and a leveling string, by use of a surveying system 1 including a surveying device 200 and a terminal device 100. The batter board setting method includes: performing benchmark measurement including measuring an altitude of a benchmark that serves as a reference height of the batter board, by use of the surveying device; performing stake top measurement including measuring an altitude of a stake top of the batter board stake installed; and performing beam top position display including calculating a difference in height from the stake top of the batter board stake to a beam top based on the reference height of the foundation stored in advance, the altitude of the benchmark, the altitude of the stake top of the batter board stake, and displaying the difference on the terminal device. Accordingly, even with various lengths and depths of the driven stakes, marks LM indicating the positions of the beam tops of the plurality of batter board stakes can be made accurately and the batter board beams 32 of the batter board 3 can be set efficiently. Moreover, this configuration allows an operator to even solely measure a stake top, while holding the survey target device 300 and the terminal device 100 in hand and make a mark LM, via checking, on site, the altitude difference between the stake top and the beam top on the screen unit 150 of the terminal device 100.

### (Leveling String Setting Function)

Now, an outline of a leveling string setting function will be described, which is one aspect of the batter board setting method, the batter board setting program, and the surveying system according to the embodiment of the present disclosure.

As illustrated in FIG. 1, since a leveling string basically stretches across two batter board beams 31 facing each other, a point M1 to which one end of the leveling string is to be fixed is determined on the top surface of one of the batter board beams 32, and the leveling string is fixed to the point M1 by nailing or any other suitable means. In order to accurately stretch the leveling string, accurate determination on the position of M1 is necessary.

A procedure of defining the point M1, to which the leveling string is fixed, on the top surface of the batter board beam 32 will be described with reference to FIG. 1. The position of a building foundation requiring a leveling string is determined in advance by the design information and stored. This is referred to as a "foundation reference side" shown as foundation reference sides ML01 and ML02 in FIG. 1. This is mere design information, and actually bearing the both ends of a leveling string at a site are batter board beams 32. In order to search for the intersection between the top surface of a batter board beam 32 and the foundation reference side using the surveying device 200, an imaginary extension of the foundation reference side is calculated. An operator searches for M1 by use of the survey target device 300, while grasping how far the position indicated by the survey target device 300 is deviated from the imaginary extension, and determines M1 at a point not deviated from the imaginary extension. After determining M1, the operator drives a nail or any other suitable means at the point as a fixing point of the leveling string.

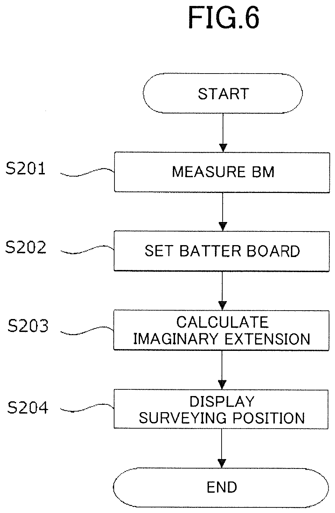

FIG. 6 is a flowchart illustrating a processing flow in a batter board setting method and a batter board setting program using the surveying system according to this embodiment.

First, in step S201, an operator places the surveying device 200 at a site, surveys the benchmark (BM), and stores the altitude of the BM as a known value in the surveying storage unit 220 or in the terminal storage unit 120.

Next, in step S202, the operator sets batter boards 3 at the site.

Next, in step S203, the operator selects two foundation points for calculating an imaginary extension, while viewing the screen unit 150 of the terminal device 100. The terminal processing unit 110 calculates the imaginary extension extending in one direction from the selected two foundation points based on the two foundation points.

Next, in step S204, the operator, actually holding the survey target device 300, performs surveying to scan and search over the top surface of the batter board beams 32. At this time, the terminal processing unit 110 calculates the distance indicating how far the surveying position surveyed by the survey target device 300 is deviated from the imaginary extension, and displays the distance on the screen unit 150 of the terminal device 100, for example.

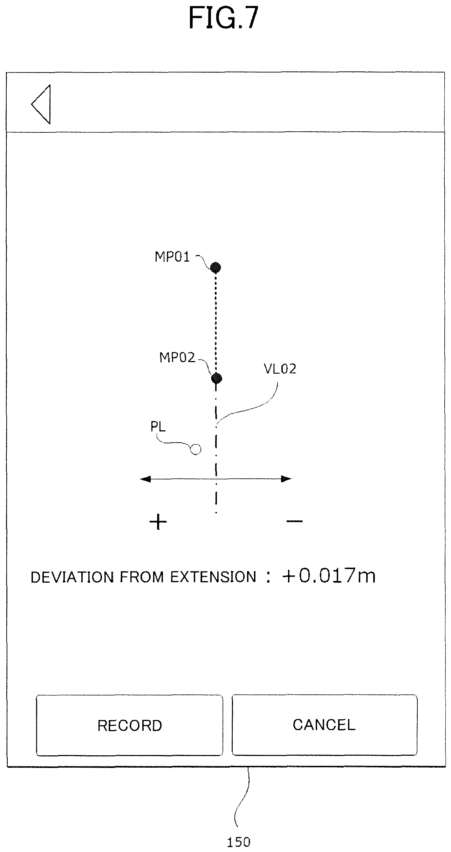

FIG. 7 is an example screen to be displayed on the screen unit 150 of the terminal device 100, for assisting the search for a setting position of a leveling string. This figure shows, as the deviation from an extension, the difference between an imaginary extension VL02 drawn to extend from the selected foundation points M01 to M02 and PL indicating the current position of the survey target device 300. The deviation of the extension can be indicated by + and - with reference to the position of the imaginary extension VL as zero along an axis defined perpendicularly to an imaginary extension VL01 in this figure, for example. The operator, guided by this information, selects, on the top surface of the batter board beam 32, a point at which the distance from the imaginary extension becomes zero, and drives at the point a nail for fixing the leveling string. The work ends when the leveling string is fixed with the driven nail.

As described above, a batter board setting method according to an embodiment of the present disclosure is a method of setting batter board tools including a batter board stake, a batter board beam, and a leveling string, by use of a surveying system including a surveying device and a terminal device. The batter board setting method includes: performing benchmark measurement including measuring a position of a benchmark that serves as a reference, by use of the surveying device; performing imaginary extension calculation including calculating an imaginary extension that is an extension of a foundation reference side indicating a point at which the leveling string is to be stretched out; and performing leveling string deviation guide including displaying a distance between a surveying position and the imaginary extension on the terminal device. Accordingly, the position at which the leveling string is to be fixed can be determined more accurately and the leveling string can be stretched accurately and efficiently.

### (Boundary Distance Measurement Function)

Now, an outline of a boundary distance measurement function will be described, which is one aspect of the batter board setting method, the batter board setting program, and the surveying system according to the embodiment of the present disclosure.

It is legally required that a building foundation be constructed with a margin of a certain distance from a boundary line of a site. It is thus important to check the distance from a foundation point at which a leveling string stretches to a site boundary line in setting a batter board, for example. However, it is not easy to measure the boundary distance that is the distance to the site boundary line, while grasping the foundation point that is the intersection of leveling strings in the air.

A procedure for measuring a boundary distance that is the distance between such the leveling string and the site boundary line will be described with reference to FIG. 1. This figure shows a boundary reference side DL01 as a boundary between sites. The boundary reference side DL01 connects the boundary point DP01 and the boundary point DP02. Outside the boundary reference side DL01, an off-site structure 4 such as a wall may be present. The boundary distance to find out here is the boundary distance between the foundation point MP02 and the boundary reference side DL01. In order to measure the distance, the imaginary extension VL01 that is an extension of the leveling string passing through the foundation point MP02 is calculated, and the intersection between the imaginary extension VL01 and the boundary reference side DL01 is then calculated. The operator moves to approach the intersection, referring to the survey target device 300 being used to survey to approach the intersection, and performs surveying at the point at which the deviation from the intersection becomes zero. Accordingly, both the position of the foundation point MP01 and the position of the intersection between the boundary reference side DL01 and the imaginary extension VL01 become known values, which allows the calculation of the distance from the site boundary line to the foundation.

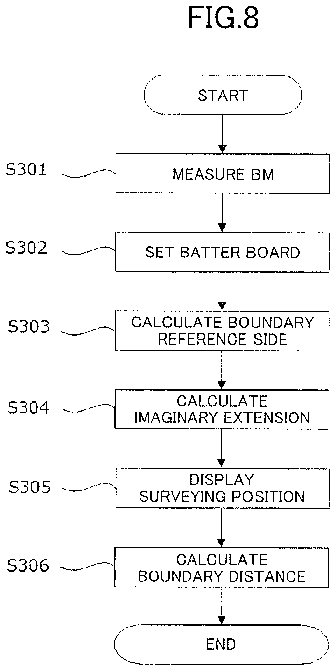

FIG. 8 is a flowchart illustrating a processing flow in a batter board setting method and a batter board setting program using the surveying system according to this embodiment.

First, in step S301, an operator places the surveying device 200 at a site, surveys the benchmark (BM), and stores the altitude of the BM as a known value in the surveying storage unit 220 or in the terminal storage unit 120.

Next, in step S302, the operator installs batter boards 3 at the site.

Then, in step S303, the operator selects two boundary points for defining a site boundary line, while viewing the screen unit 150 of the terminal device 100. The terminal processing unit 110 calculates the site boundary line connecting the selected two boundary points based on the two boundary points.

After that, in step S304, the operator selects two foundation points for calculating an imaginary extension, while viewing the screen unit 150 of the terminal device 100. The terminal processing unit 110 calculates the imaginary extension extending in one direction from the two selected foundation points based on the two foundation points.

Next, in step S305, based on the calculated boundary reference side and imaginary extension, the terminal processing unit 110 calculates the intersection therebetween. After that, the operator performs surveying with the survey target device 300 actually held in hand to search for the intersection. At this time, the terminal processing unit 110 calculates the distance indicating how far the surveying position surveyed with the survey target device 300 is deviated from the intersection, and displays the distance on the screen unit 150 of the terminal device 100, for example.

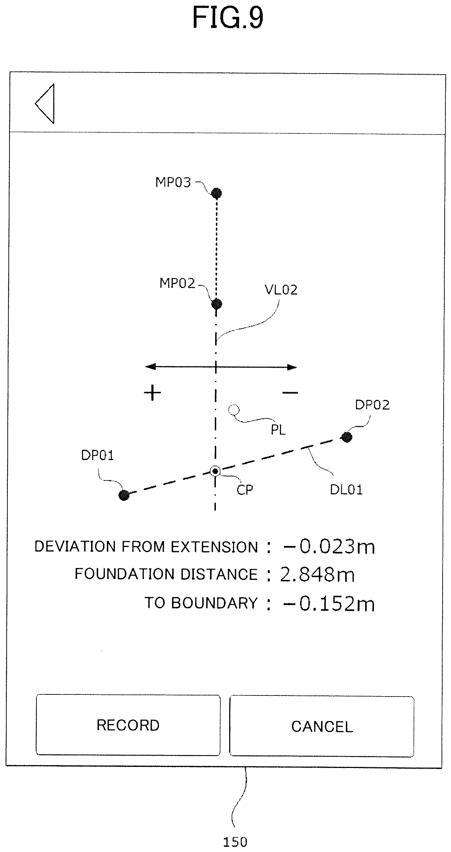

FIG. 9 is an example screen to be displayed on the screen unit 150 of the terminal device 100, for assisting the measurement of a boundary distance. This figure shows, as the deviation of an extension, the difference between an imaginary extension VL02 drawn to extend from the selected foundation points M01 to M02 and PL indicating the current position of the survey target device 300. The figure also shows a boundary reference side DL01 connecting the selected boundary points DP01 and DP02, and the intersection CP between the imaginary extension VL02 and the boundary reference side DL01. The difference in distance between the current position PL and the intersection CP is indicated as "TO BOUNDARY". Here, since the distance between the foundation point MP02 and CP also becomes clear, once the position information on the CP is acquired, this allows the calculation of the boundary distance. This screen also shows the calculated boundary distance at the same time. This will be described later.

By displaying such a screen on the screen unit 150, the terminal device 100 guides the operator by informing the operator of the deviation from the intersection. Based on the information, the operator selects a point at which the distance from the intersection CP becomes zero, and performs surveying at the point. Accordingly, both the position of the foundation point MP01 and the position of the intersection between the boundary reference side DL01 and the imaginary extension VL01 become known values, which allows the calculation of the distance from the site boundary line to the foundation.

Next, in step S305, the distance between the building foundation and the boundary line of the site is calculated and displayed. This distance will also be referred to as a "boundary distance" or "foundation distance." Placing a surveying position of the survey target device at the intersection CP sets the position as the boundary line. This allows the calculation of the distance from the boundary line to the building foundation, since the position is the boundary line.

As described above, the batter board setting method according to an embodiment of the present disclosure includes: performing boundary reference side calculation including calculating a boundary reference side indicating a boundary line of a site; and performing boundary guide including calculating an intersection between the boundary reference side and the imaginary extension, and displaying a distance between the surveying position and the intersection on the terminal device. Accordingly, the operator can specify a position for measuring the boundary distance from the site boundary line to the foundation efficiently.

The method may further include performing boundary distance calculation including calculating a distance between the surveying position and one end of the foundation reference side, the end being proximal to the boundary line of the site. Accordingly, the operator can grasp the boundary distance from the site boundary line to the foundation.

The embodiment of the present disclosure has been described above, but the aspects of the present disclosure are not limited to the embodiment.

### DESCRIPTION OF REFERENCE CHARACTERS

- 1: Surveying System
- 2: User
- 3: Batter Board
- 31: Batter Board Stake
- 32: Batter Board Beam
- 4: Off-Site Structure
- 100: Terminal Device
- 110: Terminal Processing Unit
- 120: Terminal Storage Unit
- 121: Beam Top Position Calculation Section
- 122: Imaginary Extension Calculation Section
- 123: Boundary Reference Side Calculation Section
- 124: Leveling String Deviation Guide Section
- 125: Boundary Deviation Guide Section
- 126: Boundary Distance Calculation Section
- 130: Terminal Communication Unit
- 140: Input Unit
- 150: Screen Unit
- 200: Surveying Device
- 210: Surveying Unit
- 211: Distance Measurement Unit
- 212: Angle Measurement Unit
- 220: Surveying Storage Unit
- 230: Surveying Communication Unit
- 240: Surveying Control Unit
- 250: Tracking Control Unit
- 300: Survey Target Device

## Claims

1. A batter board setting method of setting a batter board including a batter board stake, a batter board beam, and a leveling string, by use of a surveying system including a surveying device and a terminal device, the batter board setting method **characterized by** comprising:
performing benchmark measurement including measuring an altitude of a benchmark that serves as a reference height of the batter board, by use of the surveying device;
performing stake top measurement including measuring an altitude of a stake top of the batter board stake installed; and
performing beam top position display including calculating a difference in height from the stake top of the batter board stake to a reference height of a foundation based on the reference height of the foundation stored in advance, the altitude of the benchmark, the altitude of the stake top of the batter board stake, and displaying the difference on the terminal device.

2. A batter board setting method of setting batter board tools including a batter board stake, a batter board beam, and a leveling string, by use of a surveying system including a surveying device and a terminal device, the batter board setting method **characterized by** comprising:
performing benchmark measurement including measuring a position of a benchmark that serves as a reference, by use of the surveying device;
performing imaginary extension calculation including calculating an imaginary extension that is an extension of a foundation reference side indicating a point at which a leveling string is to be stretched out; and
performing leveling string deviation guide including displaying a distance between a surveying position and the imaginary extension on the terminal device.

3. The batter board setting method of claim 2, further comprising:
performing boundary reference side calculation including calculating a boundary reference side indicating a boundary line of a site; and
performing boundary deviation guide including calculating an intersection between the boundary reference side and the imaginary extension, and displaying a distance between the surveying position and the intersection on the terminal device.

4. The batter board setting method of claim 3, further comprising:
performing boundary distance calculation including calculating a distance between the surveying position and one end of the foundation reference side, the end being proximal to the boundary line of the site.

5. A surveying system for assisting setting of a batter board including a batter board stake, a batter board beam, and a leveling string, the surveying system **characterized by** comprising:
a surveying device configured to measure altitudes of a benchmark that serves as a reference height of the batter board and the batter board stake;
a terminal device including a screen unit; and
a beam top position calculation section configured to calculate a difference in height from the stake top of the batter board stake to a reference height of a foundation based on the reference height of the foundation stored in advance, the altitudes of the benchmark and the stake top of the batter board stake surveyed using the surveying device, and cause the screen unit to display the difference.

6. A surveying system for assisting setting of a batter board including a batter board stake and a batter board beam, the surveying system **characterized by** comprising:
a surveying device configured to measure a position of a benchmark that serves as a reference;
a terminal device including a screen unit;
an imaginary extension calculation section configured to calculate an imaginary extension that is an extension of a foundation reference side indicating a point at which a leveling string is to be stretched out; and
a leveling string deviation guide section configured to calculate a distance between a surveying position and the imaginary extension, and cause the terminal device to display the distance.

7. The surveying system of claim 6, further comprising:
a boundary reference side calculation section configured to calculate a boundary reference side indicating a boundary line of a site; and
a boundary deviation guide section configured to calculate an intersection between the boundary reference side and the imaginary extension, and display a distance between the surveying position and the intersection on the terminal device.

8. The surveying system of claim 7, further comprising:
a boundary distance calculation section configured to calculate a distance between the surveying position and one end of the foundation reference side, the end being proximal to the boundary line of the site.

9. A batter board setting program for setting a batter board including a batter board stake, a batter board beam, and a leveling string, by use of a surveying system including a surveying device and a terminal device, the batter board setting program **characterized by** causing:
the surveying device to perform benchmark measurement including measuring an altitude of a benchmark that serves as a reference height of the batter board;
the surveying device to perform stake top measurement including measuring an altitude of a stake top of the batter board stake installed; and
the terminal device to perform beam top position display including calculating a difference in height from the stake top of the batter board stake to a reference height of a foundation based on the reference height of the foundation stored in advance, the altitude of the benchmark, the altitude of the stake top of the batter board stake, and displaying the difference on the terminal device.

10. A batter board setting program for setting batter board tools including a batter board stake, a batter board beam, and a leveling string, by use of a surveying system including a surveying device and a terminal device, the batter board setting program **characterized by** causing:
the surveying device to perform benchmark measurement including measuring a position of a benchmark that serves as a reference;
the terminal device to perform imaginary extension calculation including calculating an imaginary extension that is an extension of a foundation reference side indicating a point at which a leveling string is to be stretched out; and
the terminal device to perform leveling string deviation guide including displaying a distance between a surveying position and the imaginary extension.
